# EUROPEAN PATENT APPLICATION

(11) **EP 4 101 294 A2**
(43) Date of publication of application: **14.12.2022**
(21) Application number: 22178287.3
(22) Date of filing: 10.06.2022
(51) Int. Cl.: A01K 3/00, A23L 13/50, A01K 31/00, A01K 39/00, A23K 50/75

(54) **ETHICAL SUBSTITUTE OF FOIE GRAS USING POULTRY LIVER AND FAT FROM ECOLOGICAL FREE RANGING DUCKS OR GEESE**

(30) Priority: 11.06.2021 DK PA202170300
(71) Applicant: Landting Slot A/S, 7500 Holstebro (DK)
(72) Inventor: DAASBJERG, Martin, 7830 Vinderup (DK); PINHOLT, Lars, 7500 Holstebro (DK)
(74) Representative: Patrade A/S

(57) **Abstract**

Methods for producing ethical substitute products for foie gras using liver and fat from ecological free ranging poultry, the compositions produced by disclosed methods, and the use of the produced compositions for dining industry, food industry and retail trade, as a part of an appetizer, main course, dessert, terrines, casseroles and baking products.

## Description

### Field of the Invention

The present invention relates to a novel method of preparing foie gras with outstanding taste quality indistinguishable from original/traditional foie gras, using liver and fat from ecological free ranging birds.

### Background of the Invention

Hepatic steatosis in ducks and geese serves as the basis for the production of "foie gras" and has a tremendous positive economic value. The "foie gras" industry is based on, at least in part, on overfeeding and, largely, force-feeding of poultry. In nature, hepatic steatosis is a pre-migration response of waterfowl, which have access to abundant feed and gorge themselves to increase their stored energy reserves.

First observed as a natural phenomenon by hunters (as far back as the time of the Pharaohs) and prized as a delicacy, "foie gras" production has developed as a part of traditional and industrial farming. In practice, it is achieved by force-feeding ducks (and geese) for 10-20 days when the animals are close to market weight. The forced feeding is usually done with a slurry feed administered by gavage and this requires intensive handling of animals and a high level of operator skill. Foie gras is therefore intrinsically expensive due to high labour inputs as well as significant animal mortality due to improperly administered gavages. In recent years, there is a significant opposing foie gras (in the United States and other countries) led by animal rights activists. Diets for the production of foie gras are traditionally high-energy diets deficient in choline and promoting hepatic steatosis if fed in high quantities via gavage. The agricultural tradition for foie gras production has created a successful technical stasis.

Different approaches exist, to resolve the ethical issue of forced feeding poultry in order to produce a quality ethical substitute to foie gras. It is required that a duck liver should weigh over 300 gram and a goose liver to weigh over 400 gram in order to be called foie gras. Known approaches to ethically producing foie gras are achieving such a liver size in birds, for example, by infecting young ducklings with a virus causing the liver to grow, or to grow a whole liver of that size from a stem cell culture taken from a poultry egg in laboratory conditions.

No one of the known approaches suggest a viable solution for neither ethical bird farmers nor consumers who love the taste of foie gras but are against the cruelty against animals and laboratory-grown food.

### Object of the Invention

One object of the invention is a method of producing an ethical substitute to foie gras, possessing taste, smell, look and consistency of original foie gras. Another object of the invention is a composition imitating foie gras in taste, smell, look and consistency and comprising only ecological ingredients, comprising liver and fat from ecological free ranging poultry.

### Description of the Invention

In one embodiment, the invention pertains to a method for changing liver composition and improve liver quality in poultry (mainly ducks and geese) by ecological free ranging of poultry. The method includes administering to the poultry a feed containing a sufficiently high amount of nitrogen containing compounds from grass feed animals, e.g., amino acids and protein, such that liver composition is changed and liver size in the poultry is increased. Poultry is raised naturally in the organic ecological grass fields and is given space to move and eat grass and insects. The method includes administering to poultry a feed comprising an effective amount of seeds and triglycerides or other lipids, such that liver composition is changed and, generally, the livers size is slightly increased compared to cage ranging and other types of feed, just by providing a feed naturally comprising a higher amount of lipids. The sale of foie gras is banned in California, US, and in other countries and regions, if it was produced using forced feeding. The law reflects growing animal welfare concerns about certain practices within animal agriculture, dramatically impacting the foie gras businesses in the United States (especially in New York and California).

An enlarged liver formation (both good lipid and/or lipoprotein content of the liver and/or enhanced liver size) is achieved without forced feeding and by administrating a diet high in fat, starch or other suitable carbohydrate, and protein from white clover and grass together with optimization of physiological responses conditioned by having lots of residential space outdoors and free ranging on grass.

In another embodiment, a method of production of the ethical foie gras by processing liver from the ecological free ranging poultry is disclosed, resulting in an ethical substitute to foie gras with a taste just as rich as that of the original foie gras. This production method comprises adding poultry fat, alcohol and agar to the composition. The term "poultry" includes individual birds and multiple birds such as, for example, chickens, guinea hens, and, preferably, ducks and geese.

### Detailed Description of the Invention

In one aspect, a method for preparing an ethical substitute to foie gras is disclosed. This method comprises in a first aspect certain conditions for raising ecologically grown free ranging ducks or geese in an open country pasture where the ducks or geese has access to:
- at least 20m2 country pasture pr animal;
- Where the vegetation in the pasture comprises at least 25% white clover, and various herbs in addition to grass;
- A feed station with an ecological feed mixture comprising:
   ∘ At least 50% wheat;
   ∘ At least 15% soy cake;
   ∘ The remaining made up of maize, beans and various minerals and vitamins
- Where the feed station is positioned at least 500 m from a source of water, preferably lake or stream;
- an indoor stable.

By facilitating these conditions it is assured that a high quality liver may be obtained when slaughtering the animals. In this manner an improved liver composition, resulting in a superior foie gras after having undergone the following method steps. Consequently, in further aspects the method comprises: obtaining and cleaning livers from ecologically grown free ranging poultry; adding at least one type of fat obtained from ecologically grown free ranging poultry; adding a first thickening agent; adding at least a second thickening agent, being different from the first thickening agent; adding at least one flavouring; performing a first homogenising step; performing at least a second homogenizing step.

In another aspect, the poultry is preferably being ducks or geese, most preferably, said poultry being ducks.

In one embodiment of the invention the ethical foie gras is manufactured by a method for preparing an ethical substitute to foie gras, comprising:
a) Obtaining and cleaning livers from ecologically grown free ranging poultry raised according to claim 1;
b) Adding at least one type of fat obtained from ecologically grown free ranging poultry;
c) Adding a stabilizing and thickening agent;
d) Adding between 15-25 wt% liver from step a) where said liver has a temperature below 0°C and between 68-85 wt % fluid fat having a temperature in the range of 55 -70 °C from step b) into a mixer, and operating said mixer to mix the liver and fat;
e) Adding a stabiliser and thickening agent from step c) being in powder form
f) Optionally adding between 1-10 wt% alchohol
g) Agitating and mixing the ingredients from step d) to f) until the mixture is homogeneous;
h) Optionally filling the mixture into suitable containers;
i) Heating the mixture, optionally in containers at 65-75 °C for 1,5 to 2,5 hours depending on the desired setting of the mixture.

This method provides a very lenient and gentle manufacturing process, such that the quality of the carefully raised poultry's liver and fat is maintained throughout the production phase and is recognisable in the finished product.

The additive (stabilising and thickening agent) may be a powder derived from whey or a whey manufacturing proces.

In yet a further aspect, said first thickening agent is agar, preferably, produced in ecologic manner. Agar is a substance obtained from red algae. Agar is a mixture of two components: the linear polysaccharide agarose and a heterogeneous mixture of smaller molecules called agaropectin. It forms the supporting structure in the cell walls of certain species of algae, and is released on boiling. These algae are known as agarophytes, and belong to the Rhodophyta (red algae) phylum. Agar has been used as an ingredient in desserts throughout Asia, and also as a solid substrate to contain culture media for microbiological work. Agar can be used as a laxative, an appetite suppressant, a vegetarian substitute for gelatine, a thickener for soups, in fruit preserves, ice cream, and other desserts, as a clarifying agent in brewing, and for sizing paper and fabrics. In this invention, agar is used as an emulsifier, creating a unique texture and consistency for the products. It has a thickener effect. It can be called gelling agent, texturing agent, stabilizing agent or stabilizer, as it supports the texture of the composition it is added to. The thickening/gelling agent in agar is an unbranched polysaccharide obtained from the cell walls of some species of red algae, primarily from tengusa (Gelidiaceae) and ogonori (Gracilaria). For commercial purposes, it is derived primarily from ogonori. In chemical terms, agar is a polymer made up of subunits of the sugar galactose.

In a further aspect of the invention, the second thickening agent is chosen from a group comprising flour or whole poultry eggs, preferably, flour is maize flour, potato flour, wheat flour or rice flour, most preferably, flour is the maize flour.

In yet a further aspect of the invention, one or more flavorings are selected from the group comprising sugar, salt and liquid comprising ethanol, preferably, said liquid comprising 18-20 percent of ethanol.

In a further aspect, all ingredients are combined together (steps a, b, c, d and e) and then homogenized (step f, the first homogenization step), and the method further comprises step (h) comprising heating the homogenised ethical substitute to foie gras to at least first temperature for at least a first period of time, preferably, said first temperature being 170-180 °C and the period of time being 35-45 min, followed by performing the second homogenizing step (g) and, finally, packaging the ethical substitute to foie gras. The homogenisation steps can be carried out by all methods known in the food industry. Most conventional homogenization method is using a food blender. A control over homogenization degree can be for example performed visually, until completely homogeneous appearance without grains is achieved.

A further aspect of the invention is directed towards a composition for an ethical substitute to foie gras, produced according to any aspect above. The composition of this aspect is especially suited for subsequent frying or baking directly from frozen phase, or thawed first.

In a further aspect of the invention, further heating the said fat up to at least a second temperature is performed before performing steps (b) and (c), preferably, second temperature being 90 °C, adding said first thickening agent (step c) to the said heated fat and homogenizing that composition in the first homogenisation step (f), reducing the temperature of said composition to below a third temperature, preferably, the third temperature being below 62 °C, performing the second homogenizing step (g) using only cleaned livers from step (a), and then combining homogenised compositions made in steps (g) and (f) with all other ingredients performing steps (d) and (e), followed by performing an additional third homogenizing step (i) and, optionally, cooling down, packaging and freezing of the ethical substitute to foie gras product.

A composition of an ethical substitute to foie gras, produced by the method of this aspect, is also claimed. This composition is already thermally cooked and, therefore, it is ready for consumption, as a pate or spread or as a lump of foie gras, etc..

A further aspect of the invention is use of the ethical substitute to foie gras for dining industry, food industry and retail trade, as a part of an appetizer, main course, dessert, terrines, casseroles and baking products. The product according to the aspect where the liver composition is temperature treated, is ready to use and is perfect as a for example spread or pate, and the product according to the aspect without heat treatment of the raw liver requires subsequent thermal cooking such as baking, frying, boiling or steaming.

Finally, a last aspect of the invention discloses a method of upbringing the poultry in order to provide the best quality source of raw liver for the ethical foie gras products. The method of ecologically growing free ranging poultry in order to obtain best liver quality raw liver for compositions, products and use as disclosed in other aspects of the invention, comprises the following steps:
- providing the ducks or geese with at least 20 m² per bird of residence space;
- providing the vegetation in the pasture comprising at least 25% by area of white clover, and various herbs in addition to grass;
- providing a feed station with an ecological feed mixture comprising at least 50% wheat and at least 15% soy cake, the balance made up of maize, beans and various minerals and vitamins;
- positioning said feed station at least 500 m from a source of water, preferably, the source of water being a lake, a river, a spring or a creek or any other natural and constant stream of water;
- providing an access to an indoor stable;
- killing and sloughing the poultry proceeding to obtaining the liver.

The ecological free ranging poultry of this aspect has a large outdoor area per bird, possibility to run and move around, free access to white clover for feeding when season allows, and using the best of industrially available food additives. The livers of the poultry grown this way would not be as fat and large as the foie gras from the forcefully fed poultry, but, using the method of this invention, a product perfectly simulating the real foie gras experience for the consumer is produced.

## Claims

1. Method of raising ducks or geese in an open country pasture where the ducks or geese has access to:
- at least 20m2 country pasture pr animal;
- Where the vegetation in the pasture comprises at least 25% white clover, and various herbs in addition to grass;
- A feed station with an ecological feed mixture comprising:
∘ At least 50% wheat;
∘ At least 15% soy cake;
∘ The remaining made up of maize, beans and various minerals and vitamins
- Where the feed station is positioned at least 500 m from a source of water, preferably lake or stream;
- an indoor stable.

2. A method for preparing an ethical substitute to foie gras, comprising:
a) Obtaining and cleaning livers from ecologically grown free ranging poultry raised according to claim 1;
b) Adding at least one type of fat obtained from ecologically grown free ranging poultry;
c) Adding a stabilizing and thickening agent;
d) Adding between 15-25 wt% liver from step a) where said liver has a temperature below 0°C and between 68-85 wt % fluid fat having a temperature in the range of 55 -70 °C from step b) into a mixer, and operating said mixer to mix the liver and fat;
e) Adding a stabiliser and thickening agent from step c) being in powder form
f) Optionally adding between 1-10 wt% alchohol
g) Agitating and mixing the ingredients from step d) to f) until the mixture is homogeneous;
h) Optionally filling the mixture into suitable containers;
i) Heating the mixture, optionally in containers at 65-75 °C for 1,5 to 2,5 hours depending on the desired setting of the mixture.

3. A method for preparing an ethical substitute to foie gras, comprising:
j) Obtaining and cleaning livers from ecologically grown free ranging poultry raised according to claim 1;
k) Adding at least one type of fat obtained from ecologically grown free ranging poultry;
1) Adding a first thickening agent;
m) Adding at least a second thickening agent, being different from the first thickening agent;
n) Adding at least one flavouring;
o) Performing a first homogenising step;
p) Performing at least a second homogenizing step.

4. The method according to claim 1, **characterized in that** the said poultry preferably being ducks or geese, most preferably, said poultry being ducks.

5. The method according to any of the preceding claims, **characterized in that** said first thickening agent is agar.

6. The method according to any of the preceding claims, **characterized in that** the said least one second thickening agent, being different from the first thickening agent, is chosen from a group comprising flour or whole poultry eggs, preferably, flour is maize flour, potato flour, wheat flour or rice flour, most preferably, flour is the maize flour.

7. The method according to any of the preceding claims, **characterized in that** said one or more flavorings are selected from the group comprising sugar, salt and liquid comprising ethanol, preferably, said liquid comprising 18-20 percent of ethanol.

8. The method according to any of the preceding claims, **characterized in that** all ingredients are combined together (steps a, b, c, d and e) and then homogenized (step f, the first homogenization step), and the method further comprises step (h) comprising heating the homogenised ethical substitute to foie gras to at least first temperature for at least a first period of time, preferably, said first temperature being 170-180 °C and the period of time being 35-45 min, followed by performing the second homogenizing step (g) and, finally, packaging the ethical substitute to foie gras.

9. The method according to any of the claims 1 and 2-5, further comprising heating the said fat up to at least a second temperature before performing steps (b) and (c), preferably, second temperature being 90 °C, adding said at least one emulsifier (step c) to the said heated fat and homogenizing that composition in the first homogenisation step (f), reducing the temperature of said composition to below a third temperature, preferably, the third temperature being below 62 °C, performing the second homogenizing step (g) using only cleaned livers from step (a), and then combining homogenised compositions made in steps (g) and (f) with all other ingredients performing steps (d) and (e), followed by performing an additional third homogenizing step (i) and, optionally, cooling down, packaging and freezing of the ethical substitute to foie gras product.

10. A composition for an ethical substitute to foie gras, produced by any of the methods according to claims 1-6 or produced by the method of claim 7.

11. Use of the ethical substitute to foie gras for dining industry, food industry and retail trade, as a part of an appetizer, main course, dessert, terrines, casseroles and baking products.

12. Method of ecologically growing free ranging poultry in order to obtain best liver quality raw liver for compositions, products and use as disclosed in any of the claims above, **characterized in that** it comprises the steps of:
- providing the ducks or geese with at least 20 m² per bird of residence space;
- providing the vegetation in the pasture comprising at least 25% by area of white clover, and various herbs in addition to grass;
- providing a feed station with an ecological feed mixture comprising at least 50% wheat and at least 15% soy cake, the balance made up of maize, beans and various minerals and vitamins;
- positioning said feed station at least 500 m from a source of water, preferably, the source of water being a lake, a river, a spring or a creek or any other natural and constant stream of water;
- providing an access to an indoor stable;
- killing and sloughing the poultry for obtaining the liver.
